# EUROPÄISCHE PATENTSCHRIFT

(11) **EP 1 717 105 B1**
(45) Veröffentlichungstag und Bekanntmachung des Hinweises auf die Patenterteilung: **02.04.2008**
(21) Anmeldenummer: 06008980.2
(22) Anmeldetag: 28.04.2006
(51) Int. Cl.: B60R 7/04

(54) **Rollo eben zur Umgebungsfläche**
Roller arranged flat to the surrounding area
Store maintenu à plat par rapport à la surface environnante

(30) Priorität: 28.04.2005 DE 102005019884
(43) Veröffentlichungstag der Anmeldung: 02.11.2006
(73) Patentinhaber: Lisa Dräxlmaier GmbH, 84137 Vilsbiburg (DE)
(72) Erfinder: Jonischkeit, Christoph, 85567 Grafing (DE)
(74) Vertreter: HOFFMANN EITLE

(56) Entgegenhaltungen:
- DE-A1- 10 023 778
- DE-C1- 19 524 177
- US-A- 2 064 470
- US-A- 2 573 962

## Beschreibung

### Feld der Erfindung

Die Erfindung betrifft ein Rollo zum Öffnen und Verschließen einer Ablage, eines Aufbewahrungsfachs, einer Bedienkonsole oder dergleichen, insbesondere zur Verwendung in einem Kraftfahrzeug.

### Hintergrund der Erfindung

Vor allem in Kraftfahrzeugen der gehobenen Mittelklasse oder Oberklasse werden hohe Anforderungen an die Optik des Innenraums und hierbei insbesondere an die Verblendung von Bedienelementen, Aufbewahrungsflächen und dergleichen, vor allem im Bereich der Mittelkonsole gestellt. Dabei kommen seit langer Zeit in bestimmten Bereichen von Kraftfahrzeugen Rollos zum Einsatz, die ein verschiebbares Öffnen und Verschließen der abgedeckten Bereiche von Hand erlauben.

Derartige Rollos bestehen üblicherweise aus einer Vielzahl von Trägerelementen, die mittels einer elastischen Verbindungsschicht derart miteinander verbunden sind, dass die Trägerelemente in Führungen eingreifen, entlang derer das Öffnen und Verschließen des Rollos erfolgt. Dabei wird üblicherweise während des Öffnens des Rollos der Verschiebeweg aus Platzgründen so ausgestaltet, dass das Rollo abseits der vom Rollo verschlossenen Öffnung über einen gekrümmten Verschiebeweg aus der von der Öffnung aufgespannten Ebene geführt wird. Ein derartiges Rollo wird zur Verwendung in einer Armstütze für Fahrzeuge beispielsweise in der DE 195 24 177 C1, als nächstliegender Stand der Technik betrachtet, beschrieben.

Bei Rollos, die in einer derartigen Weise über einen gekrümmten Verschiebeweg aus der von der zu verschließenden Öffnung aufgespannten Ebene herausgeführt werden, besteht jedoch das Problem, dass im hinteren Teil der Öffnung, somit demjenigen Teil, der beim Öffnen zuletzt und beim Wiederverschließen zuerst vom Rollo überdeckt wird, eine Absenkung des Rollos verwirklicht ist. Hierdurch wird ein Bereich ausgebildet, in dem sich Schmutzpartikel oder dergleichen ansammeln können. Darüber hinaus ist auch die Optik derartiger Verblendungen durch das Abtauchen des Rollos in einem Bereich der abgedeckten Ablage nachhaltig gestört.

Es hat daher Versuche gegeben, diesen Absenkungsbereich mittels einer ausreichend großen Blende derart abzudecken, dass der Absenkungsbereich von außen nicht mehr sichtbar ist. Eine derartige Ausgestaltung der Umgebungsbereiche von Rollos ist beispielsweise in der DE 100 23 778 A1 beschrieben. Zum vollständigen Abdecken der Absenkung muss eine derartige Blende jedoch deutlich über den Rand der Öffnung übergreifen, wodurch der Zugang zu der Ablage, dem Staufach, der Bedienkonsole oder dergleichen deutlich erschwert wird. Darüber hinaus wird durch eine derartige Blende das Problem einer Verschmutzung und das Ansammeln von kleineren Schmutz- oder Staubpartikeln nicht gelöst.

### Aufgabe der Erfindung

Es war daher eine Aufgabe der Erfindung, ein Rollo zur Verfügung zu stellen, welches die aus dem Stand der Technik bekannten Nachteile überwindet.

Diese Aufgabe wird durch ein Rollo mit den Merkmalen des Anspruchs 1 gelöst. Vorteilhafte Ausgestaltungen der Erfindung werden in den abhängigen Ansprüchen 2 bis 17 beschrieben.

Es wird in erfindungsgemäßer Weise ein Rollo zum verschiebbaren Öffnen und Verschließen der Öffnung von Ablagen oder Staufächern, Bedienkonsolen oder dergleichen zur Verfügung gestellt, bei dem das Rollo Führungselemente aufweist, die in einem Mittel zur Führung des Rollos entlang eines gekrümmten Verschiebewegs an vorzugsweise zwei gegenüberliegenden Seitenrändern der Öffnung geführt wird. Hierbei ist das erfindungsgemäße Rollo derart ausgestaltet, dass zumindest der beim Verschließen letzte die Öffnung abdeckende Rolloabschnitt aus dem gekrümmten Verschiebeweg in die von der Öffnung aufgespannte Ebene verschwenkbar ist.

Im erfindungsgemäßen Sinne muss dabei eine von der Öffnung aufgespannte Ebene nicht zwangsläufig eine gerade Erstreckung in ihre zwei Hauptrichtungen aufweisen. Eine von der Öffnung aufgespannte Ebene ist auch dann verwirklicht, wenn die Seitenränder der Öffnung eine Krümmung aufweisen und somit das erfindungsgemäße Rollo dieser von den Seitenrändern der Öffnung vorgegebenen Krümmung folgt.

Die Verschwenkung dieses Rolloabschnitts kann dabei über jedes dem Fachmann geeignet erscheinende Mittel erfolgen, beispielsweise mittels Federkraft, pneumatischer oder hydraulischer Stellelemente oder dergleichen. Sämtliche Ausgestaltungsformen, bei denen gewährleistet ist, dass ein Rollo, das beim Verschieben über einen gekrümmten Verschiebeweg geführt wird und dennoch im Schließzustand in einer Ebene vorliegt, ist vom Grundgedanken der Erfindung umfasst.

Die Führung des Rollos erfolgt dabei über Führungselemente, beispielsweise Führungsnasen, die mit dem Rollo selbst oder Teilen hiervon verbunden sind und gleichzeitig in ein Mittel zur Führung des Rollos eingreifen. Ein derartiges Mittel zur Führung des Rollos ist dabei an wenigstens einem Seitenrand der Öffnung, üblicherweise jedoch an zwei gegenüberliegenden Seitenrändern der Öffnung angeordnet und erstreckt sich üblicherweise über die gesamte Länge der vom Rollo zu verschließenden Öffnung.

In einer bevorzugten Ausführungsform der Erfindung besteht das Mittel zur Führung des Rollos aus Gleitschienen, die an gegenüberliegenden Seiten der Öffnung angeordnet sind. Hierdurch wird eine Ausgestaltung der Erfindung zur Verfügung gestellt, die besonders einfach herzustellen ist und bei geeigneter Ausführung und geeigneter Materialauswahl ein Verschieben des Rollos reibungsarm ermöglichen kann.

In einer weiteren bevorzugten Ausführungsform der Erfindung weist das Mittel zur Führung des Rollos im hinteren Bereich der Öffnung eine bis in die von der Öffnung aufgespannte Ebene reichende Abzweigung auf. In besonders bevorzugter Ausführungsform der Erfindung ist die Abzweigung als Teil der Gleitschienen ausgebildet. In einer überaus bevorzugten Ausführungsform der Erfindung ist die Abzweigung dabei im Wesentlichen tangential zur Krümmung des Verschiebewegs angeordnet.

Hierdurch wird eine Führung für das Rollo zur Verfügung gestellt, die auf besonders einfache Weise ein sicheres Verschieben des Rollos und ein ebenso sicheres Verschwenken des zumindest letzten Rolloabschnitts in die gewünschte Ebene bewirkt.

In einer besonders bevorzugten Ausführungsform der Erfindung ist die Abzweigung vom Mittel zur Führung derart ausgestaltet, dass sie lediglich eine Teilbreite des Mittels umfasst und somit vorzugsweise schmaler als das Mittel zur Führung ausgestaltet ist. Hierdurch wird eine Führung für das Rollo zur Verfügung gestellt, die zum einen einfach herzustellen ist und zum anderen besonders platzsparend das Verschwenken des Rollos in die von der Öffnung aufgespannte Ebene erlaubt.

In einer weiteren bevorzugten Ausführungsform der Erfindung weist das Rollo eine Vielzahl hintereinander angeordneter starrer Trägerelemente auf, die mittels wenigstens einer flexiblen Schicht miteinander verbunden sind. Dabei sind die Trägerelemente vorzugsweise derart ausgestaltet, dass sie die gesamte Breite des Rollos überspannen, dabei jedoch ausreichend schmal ausgestaltet sind, um die Verschiebung des Rollos entlang des gekrümmten Verschiebewegs nicht oder nur in geringem Maße zu erschweren.

Die Materialauswahl für derartige Trägerelemente ist nicht beschränkt, bevorzugt wird jedoch ein ausreichend steifer Kunststoff, der in Bezug auf die Formgebung, das Gewicht sowie die Kosten des Werkstoffs eine besonders bevorzugte Eigenschaftskombination aufweist.

Die flexible Schicht, mittels derer die oben genannten starren Trägerelemente verbunden sind, erstreckt sich vorzugsweise über die gesamte Breite und gesamte Länge des Rollos. Sämtliche Materialien, die in der Lage sind, die an ein derartiges Rollo gestellten Anforderungen bezüglich Elastizität, Formhaltigkeit, Lichtbeständigkeit, Festigkeit und dergleichen zu erfüllen, können zur Herstellung des erfindungsgemäßen Rollos verwendet werden.

In einer besonders bevorzugten Ausführungsform der Erfindung erstreckt sich jedes Trägerelement des Rollos über die gesamte Breite der abzudeckenden Öffnung und weist jeweils an seinen dem Mittel zur Führung des Rollos zugewandten Seiten wenigstens ein, vorzugsweise zwei Führungselemente auf, die in besonders bevorzugter Ausführungsform der Erfindung Führungsnasen sind, die in die Führungsschienen eingreifen. Hierdurch wird eine Verbindung des Rollos mit dem Mittel zur Führung des Rollos zur Verfügung gestellt, die besonders einfach herzustellen ist und dennoch eine besonders sichere Führung des Rollos im Mittel zur Führung gewährleistet.

In einer weiteren besonders bevorzugten Ausführungsform der Erfindung ist zumindest das hinterste Führungselement des Rollos kürzer als die übrigen Führungselemente ausgestaltet. Die Länge dieses letzten Führungselements wird dabei so gewählt, dass ein sicheres Verschieben des Führungselements in dem Mittel zur Führung durchgehend über den gesamten Verschiebeweg des Rollos gewährleistet ist.

Insbesondere aber bei einer Ausgestaltung des Mittels zur Führung mit einer Abzweigung, die lediglich eine Teilbreite des Mittels zur Führung umfasst, wird durch eine derartige Ausgestaltung gewährleistet, dass nur das kürzer ausgestaltete Führungselement in die Abzweigung eintritt, während sämtliche anderen, länger ausgestalteten Führungselemente an der Abzweigung vorbei und entlang des gekrümmten Mittels zur Führung verschoben werden.

In einer weiteren besonders bevorzugten Ausführungsform der Erfindung wird die Verschwenkung zumindest dieses letzten die Öffnung abdeckenden Rolloabschnitts mittels einer Feder bewirkt oder zumindest unterstützt. Hierdurch wird eine Vorrichtung zur Verfügung gestellt, bei der eine Verschwenkung in die von der Öffnung aufgespannte Ebene sicher erfolgt und eine vollständige Verschwenkung bis zu einem Anschlag, beispielsweise einen Endbereich der Abzweigung oder an eine die Öffnung in diesem Bereich umgebende Blende dauerhaft gewährleistet ist.

In einer weiteren bevorzugten Ausführungsform der Erfindung weist das Rollo einen Mechanismus zum Sperren der Verschiebebewegung auf. Hierdurch wird ein Rollo zur Verfügung gestellt, welches sich vorzugsweise in jedem beliebigen Verschiebezustand gegen eine weitere Verschiebebewegung sperren lässt. In besonders bevorzugter Ausgestaltung der Erfindung wirkt dieser Mechanismus ebenfalls oder ausschließlich auf den verschwenkten Rolloabschnitt, so dass bei Betätigung dieses Sperrmechanismus ein Herausschwenken des letzten Rolloabschnitts auch bei Aufbringen von großer Kraft sicher unterbunden wird.

In einer weiteren besonders bevorzugten Ausführungsform der Erfindung ist die Aufnahme, die mittels des erfindungsgemäßen Rollos geöffnet und verschlossen werden kann, in einer Armlehne oder der Mittelkonsole eines Kraftfahrzeugs angeordnet. In einer weiteren bevorzugten Ausführungsform dient die Ablage zur Aufnahme eines Telefons. Hierdurch wird eine Vorrichtung zur Verfügung gestellt, die an besonders geeigneter und für den Fahrer zugänglicher Stelle auch große Bereiche sicher verschließt und beim Öffnen einen ungehinderten und komfortablen Zugang in das Innere der Aufnahme erlaubt.

Das Rollo gemäß der Erfindung kann jede Art von geeignetem Dekormaterial aufweisen, insbesondere Holz, Holzfurnier, Kunststoff, Metallblech oder auch Leder oder lederähnliche Materialien. In einer besonders bevorzugten Ausführungsform der Erfindung weist das Rollo auf seiner Oberseite eine vorzugsweise das gesamte Rollo bedeckende Polsterung auf. Diese Polsterung wird in einer überaus bevorzugten Ausführungsform der Erfindung mit einem Leder oder lederähnlichen Material überzogen. Hierdurch wird ein Rollo zur Verfügung gestellt, welches neben einer besonders vorteilhaften Optik zudem eine sehr vorteilhafte Haptik aufweist und durch die gepolsterte Ausführung überdies als Auflagefläche für die Arme von Fahrzeuginsassen dienen kann.

In einer ganz besonders bevorzugten Ausführungsform der Erfindung weist der gepolsterte Lederbezug eine Vielzahl paralleler Steppnähte auf, die jeweils senkrecht zum Verschiebeweg des Rollos angeordnet sind. In einer überaus bevorzugten Ausführungsform der Erfindung sind die Steppnähte hierbei jeweils im Bereich zwischen den starren Trägerelementen eines derart aufgebauten Rollos angeordnet.

Hierdurch wird ein Rollo zur Verfügung gestellt, welches ohne nachteilige Einwirkungen auf die Haptik eine auch bei vielfacher Betätigung gleichbleibend vorteilhafte Optik aufweist.

In einer weiteren bevorzugten Ausführungsform der Erfindung ist die Öffnung, die mittels des erfindungsgemäßen Rollos verschlossen werden kann, vorzugsweise vollständig von einer Polsterung umgeben. Hierbei wird insbesondere dann, wenn das Rollo selbst eine Polsterung aufweist und die Oberseite des Rollos in einer Ebene mit der umgebenden Polsterung liegt eine Vorrichtung zur Verfügung gestellt, die eine im Wesentlichen durchgehende und vorzugsweise gepolsterte Fläche ohne Absenkung im hinteren Bereich des Rollos ausbildet.

### Kurze Beschreibung der Zeichnungen

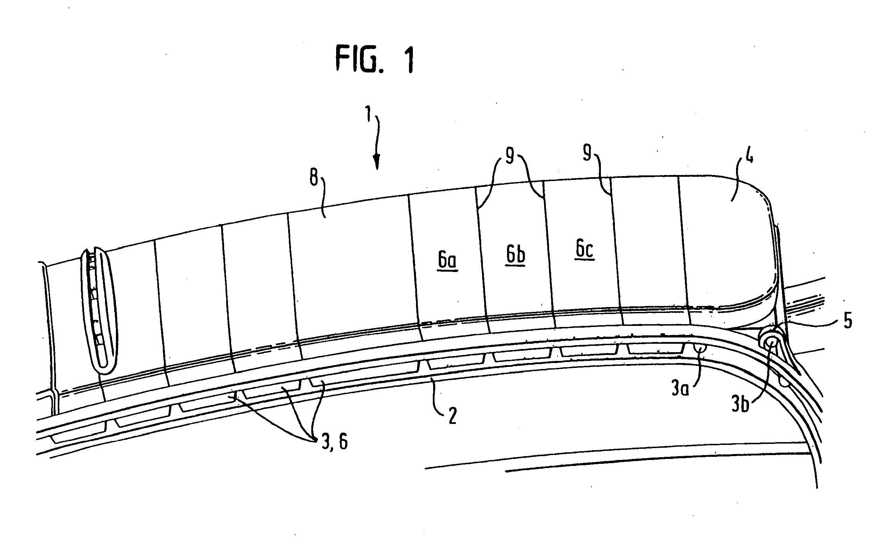

Die Erfindung wird anhand der beiliegenden Figuren 1 bis 4 näher erläutert, wobei die in diesen Figuren gezeigten Ausführungsformen nur beispielhaft dargestellt und nicht geeignet sind, den Schutzbereich der Erfindung, der in den anhängenden Patentansprüchen definiert ist, zu beschränken. In den Figuren zeigt
Fig. 1 eine perspektivische Seitenansicht eines erfindungsgemäßen Rollos,
Fig. 2 eine perspektivische Draufsicht auf den letzten die Öffnung abdeckenden Rolloabschnitt,
Fig. 3 eine perspektivische Ansicht von unten und der Rückseite eines erfindungsgemäßen Rollos, und
Fig. 4 eine perspektivische Ansicht einer Mittelarmlehne mit einem erfindungsgemäßen Rollo.

### Wege zur Ausführung der Erfindung

In Fig. 1 wird ein mit einer Polsterung 8 versehenes Rollo 1 gemäß der vorliegenden Erfindung gezeigt. An seiner Oberseite ist die Polsterung 8 des Rollos 1 von einer Vielzahl parallel zueinander stehender Steppnähte 9 unterteilt, wobei die Steppnähte 9 jeweils im Zwischenraum benachbarter Trägerelemente 6a, b, c angeordnet sind. An den jeweiligen Stirnseiten enden die Trägerelemente 6 in Führungselementen 3, die eine Breite aufweisen, die mit der Breite der jeweiligen Trägerelemente 6 korrespondiert. Das letzte Trägerelement des Rollos 1 (rechts in Fig. 1) weist dagegen zwei im Wesentlichen zylindrisch ausgeformte Führungselemente 3a, b unterschiedlicher Länge auf, wobei das letzte Führungselement 3b kürzer ausgestaltet ist als das vordere Führungselement 3. Sämtliche Führungselemente 3, 3a greifen in ein als Gleitschiene ausgebildetes Mittel zur Führung 2 ein, welches im hinteren Teil (rechts in Fig. 1) einen Krümmungsradius aufweist, der einen gekrümmten Verschiebeweg für das Rollo 1 definiert. Im Bereich der Krümmung weist das Mittel zur Führung 2 zudem eine Abzweigung 5 auf, die im Wesentlichen tangential zur Krümmung des Mittels zur Führung 2 angeordnet ist. Die Abzweigung 5 bildet an ihrem der Gleitschiene abgewandten Ende eine Aufnahme auf, deren Dimensionen und Anordnung so gewählt sind, dass das letzte Führungselement 3b formschlüssig umgriffen wird und der letzte Rolloabschnitt 4 aus dem gekrümmten Verschiebeweg in die von dem Rollo 1 aufgespannte Ebene verschwenkt vorliegt.

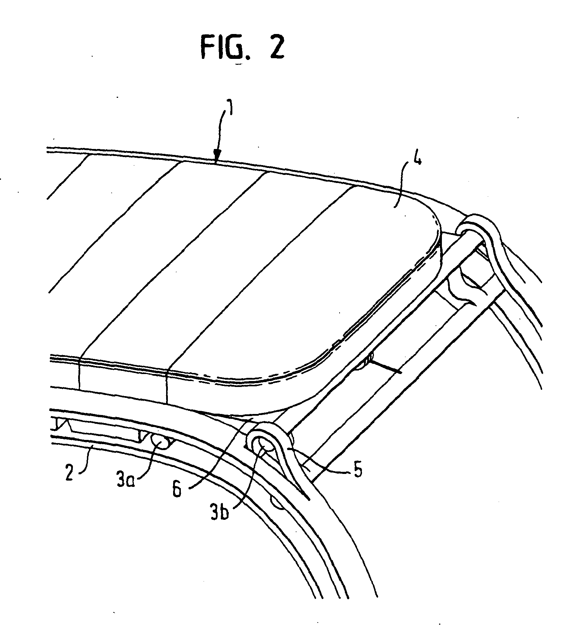

Fig. 2 zeigt im Wesentlichen eine vergrößerte Teilansicht des in Fig. 1 dargestellten Rollos 1. Das letzte Trägerelement 6 des Rollos 1 in dieser Ausführungsform (rechts in Fig. 2) weist ebenfalls zwei zylindrisch ausgeformte Führungselemente 3a, 3b auf, deren Länge derart unterschiedlich gewählt ist, dass das vordere, längere Führungselement entlang des von der Gleitschiene 2 definierten gekrümmten Verschiebewegs verfahren wird und das hintere, kürzere Führungselement 3b in die Abzweigung 5 verfährt, die nur aus einer Teilbreite der Gleitschiene 2 heraussteht.

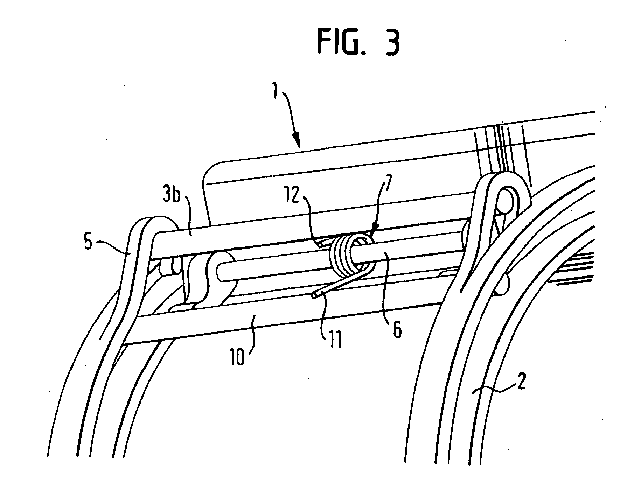

In Fig. 3 ist eine weitere Teilansicht des hinteren Teils des Rollos 1 dargestellt, bei dem im Gegensatz zu den in den Figuren 1 und 2 gezeigten Ausführungsformen eine Spiralfeder 7 die Verschwenkbewegung des gezeigten Rolloabschnitts 4 in die vom Rollo 1 aufgespannte Ebene unterstützt. Zu diesem Zweck drückt der obere Schenkel 12 der Feder 7 gegen das letzte Führungselement 3b und zwingt dieses bis zum Anschlag in die Abzweigung 5 hinein. Als Gegenlager für die Feder 7 dient dabei eine mit dem Trägerelement 6 des Rolloabschnitts 4 schwenkbar verbundener Führungsstift 12, der entlang der Krümmung der Gleitschiene 2 verfährt, und auf dem der untere Schenkel 11 der Feder 7 ruht. Wie aus der Figur deutlich ersichtlich, ist der hintere Schenkel der Abzweigung 5 so ausgestaltet, dass bei einer Öffnungsbewegung des Rollos 1 nahezu ausschließlich die Drückkraft der Feder 7 überwunden werden muss, um den letzten Rolloabschnitt 4 aus der Ebene des Rollos heraus und in die Krümmungsrichtung der Gleitschiene 2 zu zwingen, die Orientierung der Abzweigung dabei aber so gestaltet ist, dass die Öffnungsbewegung des Rollos 1 nicht wesentlich behindert wird.

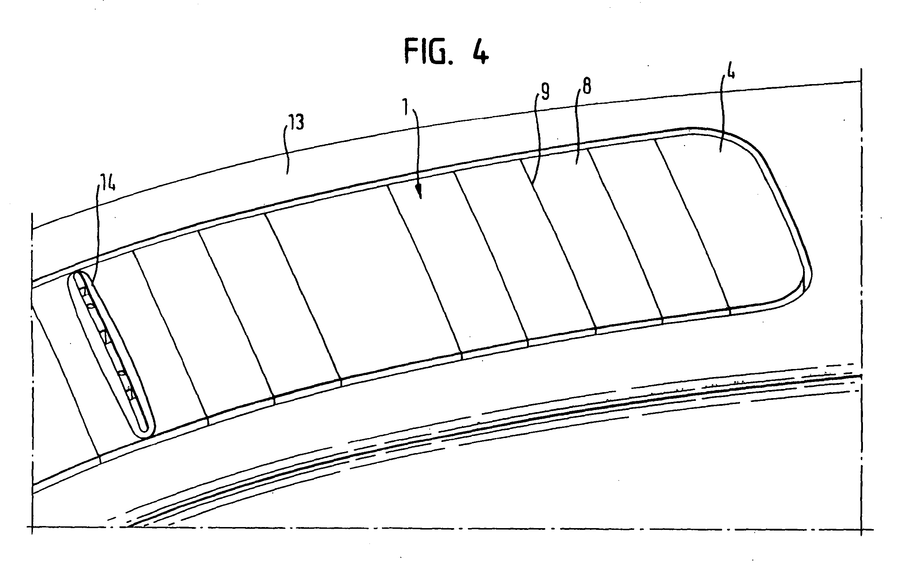

In Fig. 4 wird eine perspektivische Draufsicht auf eine gepolsterte Mittelarmlehne 13 dargestellt, in der ein erfindungsgemäßes Rollo 1 mit einer Polsterung 8 angebracht ist, wobei die Polsterung 8 von parallelen Steppnähten 9 unterbrochen ist. Am vorderen Ende des Rollos (links in Fig. 4) weist das Rollo 1 zudem einen Griff 14 auf, mittels dessen eine etwaige Verriegelung des Rollos 1 gelöst werden kann und eine Verschiebung entlang eines gekrümmten Verschiebewegs im Wesentlichen senkrecht zu der von der Oberseite der Mittelarmlehne 13 aufgespannten, hier leicht gekrümmten, Ebene verlaufenden Verschiebewegs erfolgen kann. Im geschlossenen Zustand ist das gesamte Rollo 1, somit ebenfalls der hinterste Rolloabschnitt 4, in die von der Mittelarmlehne 13 aufgespannte Ebene hinein verschwenkt. Somit liegen in der gesamten Mittelarmlehne keine Absenkungen vor, wodurch zum einen eine Ablagerung von Schmutzpartikeln unterbunden wird und zudem eine durchgehende Armauflagefläche zur Verfügung gestellt wird, was insbesondere dann besonders vorteilhaft unterstützt wird, wenn die Polsterung 9 des Rollos 1 auf gleicher Höhe mit der sie umgebenden Polsterung der Mittelarmlehne 13 angeordnet ist.

## Patentansprüche

1. Rollo (1) zum verschiebbaren Öffnen und Verschließen der Öffnung von Ablagen, Staufächern, Bedienkonsolen und dergleichen, insbesondere zur Verwendung in einem Kraftfahrzeug,
wobei an wenigstens einem Seitenrand der Öffnung wenigstens ein Mittel zur Führung (2) des Rollos (1) entlang eines gekrümmten Verschiebewegs angeordnet ist,
eine Vielzahl von mit dem Rollo verbundenen Führungselementen (3, 3a, 3b) jeweils in das Mittel zur Führung (2) des Rollos (1) eingreifen, und
zumindest der beim Verschließen des Rollos (1) letzte die Öffnung abdeckende Rolloabschnitt (4) aus dem Mittel zur Führung (2) lösbar und in die von der Öffnung aufgespannte Ebene verschwenkbar ist.

2. Rollo (1) gemäß Anspruch 1, **dadurch gekennzeichnet, dass** das Mittel zur Führung (2) des Rollos (1) an gegenüberliegenden Seiten der Öffnung angeordnete Gleitschienen sind.

3. Rollo (1) gemäß einem der voranstehenden Ansprüche, **dadurch gekennzeichnet, dass** das Mittel zur Führung (2) des Rollos (1) im hinteren Bereich der Öffnung eine bis in die von der Öffnung aufgespannte Ebene reichende Abzweigung (5) aufweist.

4. Rollo (1) gemäß Anspruch 3, **dadurch gekennzeichnet, dass** die Abzweigung (5) im Wesentlichen tangential zur Krümmung des Verschiebewegs angeordnet ist.

5. Rollo (1) gemäß Anspruch 3 oder 4, **dadurch gekennzeichnet, dass** die Abzweigung (5) nur eine Teilbreite des Mittels zur Führung (2) umfasst.

6. Rollo (1) gemäß einem der voranstehenden Ansprüche, **dadurch gekennzeichnet, dass** das Rollo (1) eine Vielzahl hintereinander angeordneter starrer Trägerelemente (6) aufweist, die über wenigstens eine flexible Schicht miteinander verbunden sind.

7. Rollo (1) gemäß Anspruch 6, **dadurch gekennzeichnet, dass** jedes Trägerelement (6) an jeder dem Mittel zur Führung (2) des Rollos (1) zugewandten Seite wenigstens ein Führungselement (3, 3a, 3b) aufweist.

8. Rollo (1) gemäß einem der voranstehenden Ansprüche 3 - 6, **dadurch gekennzeichnet, dass** zumindest das hinterste Führungselement (3b) des Rollos (1) kürzer als die übrigen Führungselemente (3, 3a) ist.

9. Rollo (1) gemäß einem der voranstehenden Ansprüche, **dadurch gekennzeichnet, dass** die Verschwenkung zumindest des letzten die Öffnung abdeckenden Rolloabschnitts (4) mittels einer Feder (7) bewirkt oder unterstützt wird.

10. Rollo (1) gemäß einem der voranstehenden Ansprüche, **dadurch gekennzeichnet, dass** das Rollo (1) einen Mechanismus zum Sperren der Verschiebebewegung aufweist.

11. Rollo (1) gemäß einem der voranstehenden Ansprüche, **dadurch gekennzeichnet, dass** die Aufnahme in einer Armlehne (13) oder der Mittelkonsole eines Kraftfahrzugs angeordnet ist.

12. Rollo (1) gemäß einem der voranstehenden Ansprüche, **dadurch gekennzeichnet, dass** das Rollo (1) auf seiner Oberseite eine vorzugsweise das gesamte Rollo bedeckende Polsterung (8) aufweist.

13. Rollo (1) gemäß Anspruch 12, **dadurch gekennzeichnet, dass** die Polsterung (8) mit einem Leder oder lederähnlichen Material überzogen ist.

14. Rollo (1) gemäß Anspruch 13, **dadurch gekennzeichnet, dass** das Rollo (1) eine Vielzahl paralleler Steppnähte (9) aufweist, die vorzugsweise jeweils im Bereich zwischen den starren Trägerelementen (6) angeordnet sind.

15. Rollo (1) gemäß einem der voranstehenden Ansprüche, **dadurch gekennzeichnet, dass** die Öffnung von einer Polsterung (8) im Wesentlichen vollständig umgeben ist.

16. Rollo (1) gemäß Anspruch 15, **dadurch gekennzeichnet, dass** die Oberseite des Rollos (1) in einer Ebene mit der umgebenden Polsterung (8) liegt.

17. Rollo (1) gemäß einem der voranstehenden Ansprüche, **dadurch gekennzeichnet, dass** die Ablage zur Aufnahme eines Telefons dient.

## Claims

1. Roller blind (1) for the displaceable opening and closing of the opening of shelves, stowage areas, control consoles and the like, in particular for use in a motor vehicle,
wherein at at least one side edge of the opening is arranged at least one means (2) for guiding the roller blind (1) along a curved path of displacement,
a plurality of guide elements (3, 3a, 3b) connected to the roller blind each engage in the means (2) for guiding the roller blind (1), and
at least the last roller blind section (4) to cover the opening during closure of the roller blind (1) is releasable from the guiding means (2) and pivotable into the plane spanned by the opening.

2. Roller blind (1) according to claim 1, **characterised in that** the means (2) for guiding the roller blind (1) is slide rails arranged on opposite sides of the opening.

3. Roller blind (1) according to any of the preceding claims, **characterised in that** the means (2) for guiding the roller blind (1) in the rear region of the opening has a branch (5) extending as far as the plane spanned by the opening.

4. Roller blind (1) according to claim 3, **characterised in that** the branch (5) is arranged substantially tangentially to the curvature of the path of displacement.

5. Roller blind (1) according to claim 3 or 4, **characterised in that** the branch (5) comprises only part of the width of the guiding means (2).

6. Roller blind (1) according to any of the preceding claims, **characterised in that** the roller blind (1) comprises a plurality of rigid carrier elements (6) which are arranged one behind the other and connected to each other by at least one flexible layer.

7. Roller blind (1) according to claim 6, **characterised in that** each carrier element (6) has at least one guide element (3, 3a, 3b) on each side facing towards the means (2) for guiding the roller blind (1).

8. Roller blind (1) according to any of the preceding claims 3 - 6, **characterised in that** at least the rearmost guide element (3b) of the roller blind (1) is shorter than the other guide elements (3, 3a).

9. Roller blind (1) according to any of the preceding claims, **characterised in that** pivoting at least of the last roller blind section (4) to cover the opening is brought about or assisted by means of a spring (7).

10. Roller blind (1) according to any of the preceding claims, **characterised in that** the roller blind (1) has a mechanism for locking the sliding movement.

11. Roller blind (1) according to any of the preceding claims, **characterised in that** the receptacle is arranged in an armrest (13) or the centre console of a motor vehicle.

12. Roller blind (1) according to any of the preceding claims, **characterised in that** the roller blind (1) on its upper side has upholstery (8) which preferably covers the whole roller blind.

13. Roller blind (1) according to claim 12, **characterised in that** the upholstery (8) is covered with a leather or leather-like material.

14. Roller blind (1) according to claim 13, **characterised in that** the roller blind (1) has a plurality of parallel quilting seams (9) which are preferably arranged in each case in the region between the rigid carrier elements (6).

15. Roller blind (1) according to any of the preceding claims, **characterised in that** the opening is substantially completely surrounded by upholstery (8).

16. Roller blind (1) according to claim 15, **characterised in that** the upper side of the roller blind (1) lies in the same plane as the surrounding upholstery (8).

17. Roller blind (1) according to any of the preceding claims, **characterised in that** the shelf serves to hold a telephone.

## Revendications

1. Store (1) pour l'ouverture et la fermeture coulissante de l'ouverture de reposoirs, compartiments de rangements, consoles d'utilisation et analogues, en particulier, pour utilisation dans un véhicule automobile,
où sur au moins un bord latéral de l'ouverture est disposé au moins un moyen de guidage (2) du store (1), le long d'un chemin de coulissement incurvé,
une pluralité d'éléments de guidage (3, 3a, 3b), reliés au store, s'engagent chacun dans le moyen de guidage (2) du store (1), et
au moins le dernier tronçon de store (4), qui couvre l'ouverture lors de la fermeture du store (1), est susceptible d'être désolidarisé du moyen de guidage (2) et peut pivoter dans le plan défini par l'ouverture.

2. Store (1) selon la revendication 1, **caractérisé en ce que** les moyens de guidage (2) du store (1) sont des rails de glissement, disposés sur des côtés opposés de l'ouverture.

3. Store (1) selon l'une des revendications précédentes, **caractérisé en ce que** le moyen de guidage (2) du store (1) présente, dans la zone arrière de l'ouverture, une ramification (5) allant jusqu'au plan défini par l'ouverture.

4. Store (1) selon la revendication 3, **caractérisé en ce que** la ramification (5) est disposée sensiblement tangentiellement à la courbure du chemin de coulissement.

5. Store (1) selon la revendication 3 ou 4, **caractérisé en ce que** la ramification (5) comprend uniquement une largeur partielle du moyen de guidage (2).

6. Store (1) selon l'une des revendications précédentes, **caractérisé en ce que** le store (1) présente une pluralité d'éléments support (6) rigides disposés les uns derrière les autres, reliés ensemble par l'intermédiaire d'au moins une couche flexible.

7. Store (1) selon la revendication 6, **caractérisé en ce que** chaque élément support (6) présente, sur chaque face, tournée vers le moyen de guidage (2), du store (1), au moins un élément de guidage (3, 3a, 3b).

8. Store (1) selon l'une des revendications 3 à 6 précédentes, **caractérisé en ce qu'**au moins l'élément de guidage (3b) le plus arrière du store (1) est plus court que les autres éléments de guidage (3, 3a).

9. Store (1) selon l'une des revendications précédentes, **caractérisé en ce que** le pivotement, au moins du dernier tronçon de store (4) couvrant l'ouverture, est provoqué ou soutenu à l'aide d'un ressort (7).

10. Store (1) selon l'une des revendications précédentes, **caractérisé en ce que** le store (1) présente un mécanisme pour bloquer le mouvement de coulissement.

11. Store (1) selon l'une des revendications précédentes, **caractérisé en ce que** le logement est disposé dans un accoudoir (13), ou la console centrale d'un véhicule automobile.

12. Store (1) selon l'une des revendications précédentes, **caractérisé en ce que** le store (1) présente, sur sa face supérieure, un rembourrage (8) couvrant, de préférence, l'ensemble du store.

13. Store (1) selon la revendication 12, **caractérisé en ce que** le rembourrage (8) est revêtu d'un cuir ou d'un matériau analogue à du cuir.

14. Store (1) selon la revendication 13, **caractérisé en ce que** le store (1) présente une pluralité de coutures piquées (9) parallèles, disposées de préférence chaque fois dans la zone située entre les éléments supports (6) rigides.

15. Store (1) selon l'une des revendications précédentes, **caractérisé en ce que** l'ouverture est pratiquement complètement entourée par un rembourrage (8).

16. Store (1) selon la revendication 15, **caractérisé en ce que** la face supérieure du store (1) est située dans le plan du rembourrage (8) d'entourage.

17. Store (1) selon l'une des revendications précédentes, **caractérisé en ce que** le reposoir sert à loger un téléphone.
